# EUROPÄISCHE PATENTANMELDUNG

(11) **EP 1 930 702 A1**
(43) Veröffentlichungstag der Anmeldung: **11.06.2008**
(21) Anmeldenummer: 06125585.7
(22) Anmeldetag: 07.12.2006
(51) Int. Cl.: G01F 13/00, G01G 13/02, A61J 3/00, B65B 1/12

(54) **Dosiervorrichtung für pulver- oder pastenförmiges Dosiergut**

(71) Anmelder: Mettler-Toledo AG, 8606 Greifensee (CH)
(72) Erfinder: Lüchinger, Paul, 8610, Uster (CH); Ehrbar, Sandra, 8605, Gutenswil (CH); Zehnder, Marc, 8604, Volketswil (CH)

(57) **Zusammenfassung**

Die Erfindung umfasst eine Dosiervorrichtung für pulver- oder pastenförmiges Dosiergut, in deren Antriebsvorrichtung ein Dosierkopf eingesetzt und daraus entfernt werden kann. Der Dosierkopf kann mit mindestens einem Entnahmegefäss verbunden werden. Der Dosierkopf weist ein Gehäuse mit einer im Betriebszustand nach unten gerichteten Austrittsöffnung und einer nach oben gerichteten Lager- und Durchtrittsstelle auf, wobei im Gehäuse ein rotierbares Verschlusselement und eine Verschlusswelle, deren Mittellängsachse im Betriebszustand im Wesentlichen vertikal verläuft, angeordnet sind. Im Gehäuse des Dosierkopfs ist mindestens ein Zufuhrschacht zwischen der mindestens einen Aufnahme und der Austrittsöffnung ausgebildet. Ferner ist die Mittellängsachse des mindestens einen Zufuhrschachts in spitzem Winkel zur Mittellängsachse der Verschlusswelle angeordnet, wobei dessen Winkelweite grösser als 0° und kleiner als 90° ist und dessen Winkelscheitel im Betriebszustand gegen unten gerichtet ist. Des Weiteren verläuft die Mittellängsachse der Verschlusswelle ausserhalb der mindestens einen Aufnahme.

## Beschreibung

Die vorliegende Erfindung bezieht sich auf eine Dosiervorrichtung für pulver- oder pastenförmiges Dosiergut.

Solche Dosiervorrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches einen Dosierkopf aufweist. Dabei ist es wünschenswert, die zu dosierende Substanz durch eine kleine Öffnung der Dosiervorrichtung auszutragen, so dass sie auch gezielt in ein Gefäss mit einem kleinen Öffnungsquerschnitt abgefüllt werden kann.

Dosiervorrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben, die aus einem Entnahmegefäss mit einem verschliessbaren Auslass an seiner Unterseite besteht. Als Verschlusselement dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt. Ferner wird das Entnahmegefäss von einer Verschlusswelle durchdrungen, welche an der Oberseite des Entnahmegefässes über dieses hinausragt und mit der Antriebswelle eines Antriebs koppelbar ist. Das Entnahmegefäss ist durch einen Befestigungsflansch an seiner Unterseite mit der Dosiervorrichtung verbunden. Auf den Deckel des Entnahmegefässes wirken mehrere Druckzylinder, über deren Hub die Auslassöffnung und damit die Fördermenge aus dem Entnahmegefäss beeinflusst werden kann. Die vertikale Anordnung der Verschlusswelle ist ausserordentlich wichtig, sofern stark koagulierende Pulver oder pastenförmiges Dosiergut dosiert werden sollen, da der Materialfluss im Behälter in der vertikalen Richtung erfolgt und damit durch die Schwerkraft unterstützt wird.

Zum nachfüllen ist der Dosierkopf zusammen mit dem Entnahmegefäss aus der Antriebsvorrichtung entfernbar. Aufgrund der im Entnahmegefäss geführten Antriebswelle gestaltet sich aber der Nachfüllprozess recht schwierig, insbesondere beim Nachfüllen toxischer Substanzen oder beim Nachfüllen von Substanzen für Heilmittel, bei denen eine Kontamination für die Anwender des Heilmittels eine Gefahr darstellen könnte.

Um diesem Problem zu begegnen ist in EP 0 234 332 A1 eine Dosiervorrichtung offenbart, die ein Entnahmegefäss aufweist, mit dessen unterer Seite ein Dosierkopf und mit dessen oberer Seite eine Antriebseinheit verbunden ist. Ferner weist das Entnahmegefäss einen seitlich herausragenden Stutzten auf, über welchen das Entnahmegefäss befüllt werden kann. Auch in dieser Dosiervorrichtung ist die Antriebsachse innerhalb des Entnahmegefässes angeordnet. Diese Dosiervorrichtung kann zwar einfacher als die vorangehend beschriebe Vorrichtung befüllt werden, jedoch weist jeder Dosierkopf, abhängig vom verwendeten Dosiergut, von den verwendeten Werkstoffen des Dosierkopfs und von der technischen Auslegung des Dosierkopfsystems im Bereich der Austrittsöffnung Verschleisserscheinungen auf. Diese Verschleisserscheinungen erfordern je nach geforderter Präzision einen raschen Austausch des Dosierkopfs und damit eine Trennung von Dosierkopf, Antriebseinheit und Entnahmegefäss, da kaum anzunehmen ist, dass die Dosiervorrichtung inklusive der teuren Antriebseinheit entsorgt werden soll. Abgesehen vom zeitlichen Aufwand den eine derartige Demontage in sich birgt, weist auch diese Dosiervorrichtung zumindest bei der Weiterverwendung der Antriebseinheit dieselben Probleme bezüglich Kontamination wie die vorangehend beschriebene Dosiervorrichtung auf, da Teile der Antriebseinheit mit dem Dosiergut in Kontakt stehen.

Angesichts der beschränkten Einsatzmöglichkeit der vorangehend beschriebenen Dosiervorrichtungen liegt der vorliegenden Erfindung daher die Aufgabe zugrunde, eine Dosiervorrichtung zu schaffen, deren Entnahmegefäss auf einfache Weise befüllt werden kann. Ferner sollen das Entnahmegefäss und der Dosierkopf ohne Kontaminationsgefahr als geschlossene Einheit auf einfache Weise in die Antriebsvorrichtung eingesetzt beziehungsweise nach erfolgter Dosierung des Inhaltes von dieser getrennt werden können.

Diese Aufgabe wird dadurch gelöst, dass eine Dosiervorrichtung für pulver- oder pastenförmiges Dosiergut eine Antriebsvorrichtung, mindestens einen in die Antriebsvorrichtung einsetzbaren beziehungsweise aus der Antriebsvorrichtung entfernbaren Dosierkopf und mindestens ein Entnahmegefäss aufweist. Das Entnahmegefäss ist über mindestens eine am Dosierkopf ausgebildete Aufnahme mit diesem verbindbar. Im Betriebszustand ist der Dosierkopf unterhalb einer Antriebseinheit der Antriebsvorrichtung angeordnet. Der Dosierkopf weist ein Gehäuse mit einer im Betriebszustand nach unten gerichteten Austrittsöffnung und einer nach oben gerichteten Lager- und Durchtrittsstelle auf, wobei im Gehäuse ein rotierbares Verschlusselement und eine Verschlusswelle, deren Mittellängsachse im Betriebszustand im Wesentlichen vertikal verläuft, angeordnet sind. Das Verschlusselement ist im Bereich der Austrittsöffnung angeordnet und über die in der Lager- und Durchtrittsstelle drehbar und entlang ihrer in Lastrichtung angeordneten Mittellängsachse verschiebbar gelagerte Verschlusswelle sowie über mindestens eine Kupplung mit einer Antriebswelle der Antriebseinheit kuppelbar. Durch die axiale Verschiebung der Verschlusswelle und des Verschlusselements wird die Austrittsöffnung mehr oder weniger weit geöffnet und dadurch der Volumenstrom des Dosiergutes durch die Austrittsöffnung gesteuert. Im Gehäuse des Dosierkopfs ist mindestens ein Zufuhrschacht zwischen der mindestens einen Aufnahme und der Austrittsöffnung ausgebildet. Ferner ist die Mittellängsachse des mindestens einen Zufuhrschachts in spitzem Winkel zur Mittellängsachse der Verschlusswelle angeordnet, wobei dessen Winkelweite grösser als 0° und kleiner als 90° ist und dessen Winkelscheitel im Betriebszustand gegen unten gerichtet ist. Durch die Schrägstellung des Zufuhrschachts kann das Dosiergut alleine durch die Wirkung der Schwerkraft vom Entnahmegefäss zur Austrittsöffnung gelangen, sofern der spitze Winkel kleiner ist als der Schüttwinkel des Dosiergutes. Des Weiteren verläuft die Mittellängsachse der Verschlusswelle ausserhalb der mindestens einen Aufnahme. Damit wird erreicht, dass das mindestens eine Entnahmegefäss im Betriebszustand in seiner räumlichen Anordnung mindestens teilweise seitlich der Antriebswelle und/oder der Verschlusswelle angeordnet ist.

Durch diese Ausgestaltung kann das Entnahmegefäss im Bereich der Aufnahme vom Dosierkopf getrennt werden, ungeachtet dessen, ob der Dosierkopf noch in der Antriebsvorrichtung eingesetzt ist oder nicht. Die Trennung von Entnahmegefäss und Dosierkopf wird somit ermöglicht, ohne dass eine durch das Entnahmegefäss führende Verschlusswelle dies erschwert. Sinnvollerweise wird aber die Einheit aus Dosierkopf und Entnahmegefäss zuerst aus der Antriebsvorrichtung herausgelöst und über Kopf gestellt, so dass die Austrittsöffnung gegen oben gerichtet ist und das verbliebene Dosiergut durch Schütteln in das Entnahmegefäss zurück gelangt um erst danach den entleerten Dosierkopf vom Entnahmegefäss zu trennen. Durch den im spitzen Winkel zur Verschlusswelle angeordneten Zuführschacht kann die Innenkontur derart vorteilhaft ausgestaltet werden, dass der Dosierkopf vor der Trennung vom Entnahmegefäss mit dieser einfachen Methode problemlos entleert werden kann.

Um dies zu erleichtern, kann die Austrittsöffnung mit kreisförmigem Querschnitt versehenen und das Verschlusselement in seiner Grundform zylinderförmig ausgebildet sein. Dadurch entstehen im Bereich des Verschlusselements keine Hinterschnitte, Spalten und Ecken, in denen das Dosiergut hängen bleibt.

In einer ersten Ausführung weist dieses Verschlusselement einen dem Verschliessen der Austrittsöffnung dienenden zylinderförmigen Verschlussbereich und einen diesem benachbart angeordneten der Austragung von zu dosierender Substanz dienenden Austragungsbereich auf, wobei der Austragungsbereich sich im Betriebszustand der Dosiereinrichtung im unteren Bereich des Austragungs- und Verschlusselements befindet und eine Endfläche aufweist, die gegenüber einer Ebene orthogonal zur Mittellängsachse schräg verläuft, wobei der tiefstgelegene Punkt dieser Endfläche, eine Spitze bildend, mit einem Punkt der Zylindermantelfläche zusammenfällt und der höchstgelegene Punkt ebenfalls mit einem Punkt der Zylindermantelfläche zusammenfällt.

Alternativ dazu kann das in seiner Grundform zylinderförmig ausgebildete Verschlusselement mindestens einen dem Verschliessen der Austrittsöffnung dienenden Verschlussbereich und einen diesem benachbart angeordneten der Austragung von zu dosierender Substanz dienenden Austragungsbereich aufweisen, wobei der Austragungsbereich mit mindestens einer vom Zylindermantel ausgehenden Vertiefung versehen ist. Bei dieser Ausführung kann der Verschlussbereich im Betriebszustand oberhalb und/oder unterhalb des Austragungsbereichs angeordnet sein.

Idealerweise ist im Gehäuse eine Aussparung für ein mit der Verschlusswelle verbundenes Rührwerk rotationssymmetrisch zur Mittellängsachse der Verschlusswelle ausgebildet. Diese Aussparung ist zwischen der Austrittsöffnung und dem Zufuhrschacht angeordnet.

Das Rührwerk dient nicht nur zur Auflockerung des Dosierguts und der Verhinderung von Ablagerungen innerhalb des Dosierkopfs. Es kann ebenso die Zuführung des Dosiergutes zur Austrittsöffnung unterstützen, sofern es zumindest einen Rührflügel aufweist, dessen Kreisbahn um die Mittellängsachse der Verschlusswelle am Zufuhrschacht vorbeiführt, wobei der Rührflügel eine, dem Abschälen des aus dem Zufuhrschacht in die Aussparung eintretenden pulver- oder pastenförmigen Dosierguts dienende und gegen die Mittellängsachse und/oder zur Austrittsöffnung hin fördernde Flügelstellung aufweist.

Durch die mechanischen Eigenschaften des Dosiergutes können erhebliche Kräfte auf den Rührflügel einwirken. Deshalb sollte der mindestens eine Rührflügel zumindest an zwei Stellen mit der Verschlusswelle und/oder dem Verschlusskörper formschlüssig verbunden sein, damit der Rührflügel ausreichend gegen Deformation geschützt ist.

Um die vorangehend beschriebene Entleerbarkeit des Dosierkopfes nicht zu beeinträchtigen, ist es von Vorteil, wenn sich die Mittellängsachse des mindestens einen Zufuhrschachts und die Mittellängsachse der Verschlusswelle in einem Schnittpunkt schneiden und der Schnittpunkt im Bereich der rotationssymmetrischen Aussparung angeordnet ist.

Da der Füllstand des Pulvers bei aufgefülltem Entnahmegefäss die Lager- und Durchtrittsstelle im Betriebszustand überragt, steht die Lager- und Durchtrittsstelle unter einer Art hydrostatischem Druck, mit dem die Partikel des Dosierguts in die Lager- und Durchtrittsstelle gedrückt werden. Dieser Druck ist im Wesentlichen abhängig von der Konsistenz und der Korngrösse des Dosiergutes. Diesem Druck kann teilweise dadurch entgegengewirkt werden, dass im Gehäuse ein rotationssymmetrisch zur Mittellängsachse der Verschlusswelle und gegen die Lager-und Durchtrittsstelle weisender Dom ausgebildet ist. Durch den Dom wird die Lager-und Durchtrittsstelle aus dem direkten Massenstrom des Dosiergutes herausgehalten, was dazu führt, dass weniger im Dosiergut vorhandene, sehr kleine Partikel an der Lager- und Durchtrittsstelle vorbeigeführt werden und damit die Wahrscheinlichkeit sinkt, dass diese sehr kleinen Partikel in die Lager- und Durchtrittsstelle eindringen.

In einer vorteilhaften Ausführung wird die Verschlusswelle mit einer im Gehäuse abgestützten Feder beaufschlagt. Die federbeaufschlagte Verschlusswelle weist ferner einen die axiale Verschiebung in Richtung der Lager- und Durchtrittsstelle begrenzenden Anschlag auf. In der Lager- und Durchtrittsstelle, im Zufuhrschacht, in der rotationssymmetrischen Aussparung oder im Dom ist ein der Definition der Verschlussposition dienender Gegenanschlag ausgebildet, wobei in der Verschlussposition ein Verschlussbereich des Verschlusselements die Austragungsöffnung verschliesst. Somit schliesst der Verschlussbereich die Austragungsöffnung automatisch, wenn die Verschlusswelle von der Antriebswelle entkoppelt wird. Diese selbstschliessende Eigenschaft des Dosierkopfs dient insbesondere der Sicherheit im Umgang mit toxischen Substanzen, verhindert aber auch ein Eindringen von Verunreinigungen in das Entnahmegefäss beziehungsweise in den Dosierkopf.

Sofern der Gegenanschlag im Zufuhrschacht, in der Aussparung oder im Dom angeordnet ist, kann sich Dosiergut zwischen dem Anschlag und dem Gegenanschlag ansammeln und so ein vollständiges Schliessen des Dosierkopfs verhindern. Vorzugsweise ist deshalb am Anschlag oder auf dessen Berührungsfläche mit dem Gegenanschlag mindestens ein der Entfernung von Dosiergut zwischen Anschlag und Gegenanschlag dienendes Schabelement ausgebildet. Dieses Schabelement kann eine Kante sein, die durch eine Anfräsung des Anschlages ausgebildet werden kann. Selbstverständlich können an der Anschlagfläche oder an der Gegenanschlagfläche auch feine, spiralförmig verlaufende Nuten angeordnet sein. Durch diese Nuten wird das eingeklemmte Dosiergut infolge der durch die rotierende Verschlusswelle bewirkte Relativbewegung der Anschlagfläche zur Gegenanschlagfläche aus diesem Bereich gefördert, bis die Anschlagsfläche an der Gegenanschlagsfläche anliegt.

Um das Risiko einer Kontamination des Dosiergutes oder der Umgebung zu minimieren, die Lagerungsdauer des Dosiergutes zu erhöhen oder sofern der Dosierkopf über mehrere Zufuhrschächte und Aufnahmen für Entnahmegefässe verfügt, können einer, mehrere oder alle Zufuhrschächte mit einem von aussen betätigbaren Absperrorgan versehen sein. Dadurch lassen sich einzelne Entnahmegefässe zuschalten. Selbstverständlich kann das Absperrorgan auch der Beeinflussung der Fliessgeschwindigkeit im Zufuhrschacht dienen oder eine zusätzliche Verschlussmöglichkeit darstellen, wenn die zu dosierenden Substanzen im Entnahmegefäss mit aufgesetztem Dosierkopf gelagert werden sollen. Bei geeigneter Werkstoffpaarung und Ausgestaltung, beispielsweise als Drehschieber, lässt sich das Dosiergut innerhalb des Entnahmegefässes sogar gasdicht lagern. Im Gehäuse kann auch noch mindestens ein Gasanschluss angeordnet sein, der über eine gasdurchlässige Verbindung mit dem Zufuhrschacht verbunden ist. Die gasdurchlässige Verbindung kann mindestens eine Bohrung und/oder eine gasdurchlässige Membran sein. Je nach Auslegung dieser Membran wird verhindert, dass Partikel des Dosiergutes in den Gasanschluss gelangen. Bei geeigneter Ausgestaltung kann vermittels des zugeführten Gases die Austragungsleistung an der Austrittsöffnung beeinflusst werden. Ferner kann das zugeführte Gas auch der Aufwirbelung des Dosiergutes dienen, um die Koagulation des Dosiergutes oder ein Anhaften des Dosiergutes an den Wänden des Zufuhrschachtes und des Entnahmegefässes zu minimieren. Durch diesen Gasanschluss kann zur Verlängerung der Lagerfähigkeit des Dosiergutes ein inertes Gas in das Entnahmegefäss eingebracht werden. Je nach Eigenschaften des Inertgases (leichter oder schwerer als das zu verdrängende Medium) kann der Anschluss zwischen dem Absperrorgan und der Austrittsöffnung oder zwischen dem Absperrorgan und der Aufnahme angeordnet sein. Gegebenenfalls kann bei letzterer Ausführung der Gasanschluss auch der Erzeugung eines Vakuums innerhalb des Entnahmegefässes und/oder des Dosierkopfs dienen. Ferner kann im Gehäuse ein zusätzlicher Hohlraum mit einer gasdurchlässigen Verbindung zum Zufuhrschacht vorhanden sein, welche mit einer die Feuchtigkeit adsorbierenden Substanz, beispielsweise Silikagel oder Molekularsieb verfüllt ist.

Pastenförmiges Dosiergut mit kleiner Viskosität oder Pulver mit hoher Rieselfähigkeit können aufgrund des beim Dosiervorgang abnehmenden Füllstandes im Entnahmegefäss einen grossen Einfluss auf die Präzision der Dosiervorrichtung ausüben. Um die Füllstandseffekte auf den Dosiervorgang auszugleichen, kann der mindestens eine Zufuhrschacht eine der Beeinflussung der Fliessgeschwindigkeit des Dosiergutes dienende Engstelle aufweisen. Diese Engstelle kann beispielsweise die Innenkontur einer Venturi-Düse aufweisen, aber auch eine Lochblende, ein Siebeinsatz und dergleichen mehr sein.

Gerade der Einsatz eines oder mehrerer Siebe im Zufuhrschacht kann sehr viele Vorteile aufweisen. Durch das Sieb werden grosse Klumpen im Entnahmegefäss zurückgehalten. Dies schont einerseits den Bereich der Austrittsöffnung vor Verstopfungen, andererseits kann der Anwender sicher sein, dass nur Partikel bis zu einer vorgegebenen Grösse ausdosiert werden. Falls geeignete Mittel wie ein Vibrationserzeuger zur Zerkleinerung dieser Klumpen eingesetzt wird, hilft das Sieb mit, diese Klumpen zu zerkleinern. Bei hintereinander geschalteten Sieben mit abgestuften Querschnitten der Durchbrüche, wird das Dosiergut im Zufuhrschacht nach Korngrössen sortiert, wobei zuerst die kleinsten Partikel dosiert werden können. Sobald diese dosiert sind, kann der Siebeinsatz mit den kleinsten Durchbrüchen beispielsweise analog dem Absperrorgan verschwenkt oder seitlich herausgezogen werden. Dadurch werden die nächst grösseren Partikel freigegeben und können dosiert werden. Diese Schritte können mit den nächsten Sieben fortgeführt werden, bis alle Partikel, welche kleiner sind als der maximale Öffnungsquerschnitt der Austrittsöffnung, dosiert worden sind.

Um die Anzahl Siebeinsätze zu verringern, können auch zwei benachbart zueinander angeordnete, gegeneinander verdrehbare, verschwenkbare oder verschiebbare Siebeinsätze im Zufuhrschacht angeordnet sein. Durch diese Anordnung, welche eine Vielzahl einstellbarer Blendenöffnungen aufweist, kann die maximal zu dosierende Korngrösse von Null bis hin zum maximalen Querschnitt der Siebdurchbrüche frei wählbar eingestellt werden. Besonders einfach und Raum sparend sind Anordnungen, bei denen durch Verdrehung der Siebeinsätze gegeneinander die Grösse der Blendenöffnungen eingestellt werden kann.

Damit nicht nur eine einzige Ausführung von Entnahmegefässen mit dem Dosierkopf verbunden werden kann beziehungsweise nur eine beschränkte Anzahl unterschiedlicher Dosierköpfe hergestellt werden muss und um eine breite Palette verschiedenster Entnahmegefässe mit unterschiedlichen Anschlussdimensionen verwenden zu können, kann die Aufnahme mit verschieden ausgestalteten Zwischenflanschen als Adapter verbunden werden.

Damit eine einfache Handhabung der Entnahmegefässe beim Einsetzen in die Antriebsvorrichtung beziehungsweise beim Entfernen aus der Antriebsvorrichtung gewährleistet ist, weisen in betriebsbereitem Zustand der Dosiervorrichtung die Antriebswelle und die Verschlusswelle vorzugsweise eine gemeinsame Mittellängsachse auf. Dadurch kann durch einfaches, lineares Verschieben der Antriebswelle der Antrieb von der Verschlusswelle entkoppelt, beziehungsweise mit dieser gekoppelt werden. Dadurch sind auch verschiedenste formschlüssige und kraftschlüssige Kupplungstypen verwendbar wie Klauenkupplungen, Reibkupplungen und dergleichen.

Die Mittellängsachse des in den Dosierkopf eingesetzten Entnahmegefässes kann grundsätzlich in Bezug auf die Mittellängsachse der Verschlusswelle unter einem beliebigen Winkel angeordnet sein. Je nach Ausrichtung der Mittellängsachse muss das Entnahmegefäss jedoch mit zusätzlichen Zufuhrelementen, wie beispielsweise Förderschnecken, ausgerüstet sein, so dass das Dosiergut in den Zufuhrschacht gelangen kann. Um dies zu vermeiden, wird dieser Winkel vorzugsweise so gewählt, dass bei in die Antriebsvorrichtung eingesetztem Dosierkopf rieselfähiges Dosiergut durch die Einwirkung der Schwerkraft zur Austrittsöffnung des Dosierkopfs gelangen kann. Selbstverständlich können auch bei diesen Ausführungen zusätzliche Fördermittel im Entnahmegefäss angeordnet sein, insbesondere wenn stark koagulierendes Dosiergut vom Entnahmegefäss über den Zufuhrschacht an die Austrittsöffnung gefördert werden soll.

In einer ersten vorzugsweisen Ausführung schneiden sich bei in den Dosierkopf eingesetztem Entnahmegefäss die Mittellängsachse des mindestens einen Entnahmegefässes und die Mittellängsachse des zugeordneten, mindestens einen Zufuhrschachts im Bereich der Aufnahme oder des Zwischenflansches in einem Punkt, wobei der Winkel zwischen den Mittellängsachsen beliebig gross sein kann.

In einer zweiten vorzugsweisen Ausführung weist bei in den Dosierkopf eingesetztem Entnahmegefäss das mindestens eine Entnahmegefäss und der zugeordnete, mindestens eine Zufuhrschacht eine gemeinsame Mittellängsachse auf.

In einer dritten vorzugsweisen Ausführung sind bei in den Dosierkopf eingesetztem Entnahmegefäss die Mittellängsachse der Verschlusswelle und die Mittellängsachse des Entnahmegefässes parallel zueinander angeordnet.

Es hat sich gezeigt, dass das Dosiergut besonders gut zur Austrittsöffnung gelangen kann, wenn runde Querschnitte verwendet werden, da dies zu einer Minimierung der Kontaktoberfläche zwischen dem Dosiergut und der Innenkontur des Dosierkopfs bei grösstmöglichem Durchlassquerschnitt führt. Vorzugsweise weist deshalb der Zufuhrschacht in einer Ebene orthogonal zur Mittellängsachse des Zufuhrschachts einen ovalen oder kreisrunden Querschnitt auf.

In einer weiteren Ausführung weist das Entnahmegefäss einen rohrförmigen Körper auf, an dessen erster Öffnung ein in die Aufnahme oder zum Zwischenflansch passender Befestigungsflansch und dessen zweite Öffnung als verschliessbare Einfüllöffnung ausgebildet sind. Ein solches Entnahmegefäss ist wieder auffüllbar, ohne dass es vom Dosierkopf getrennt werden muss. Für sensibles Dosiergut, beispielsweise toxische oder sehr teure Substanzen ist aber die Verwendung von Entnahmegefässen vorzuziehen, welche nur eine Öffnung aufweisen über welche das Entnahmegefäss mit der Aufnahme oder dem Zwischenflansch des Dosierkopfs verbunden werden kann.

Wenn nur sporadisch eine Entnahme von Dosiergut vorgesehen ist und die Einheit aus Dosierkopf und Entnahmegefäss gleichzeitig als Lagergefäss dienen soll, ist es vorteilhaft, wenn der Dosierkopf und/oder das Entnahmegefäss eine Identifikationsmarkierung oder eine Sende/Empfangseinheit mit Datenspeichermodul aufweist und eine vom Dosierkopf und Entnahmegefäss getrennt angeordnete Lese/Schreibvorrichtung vorhanden ist. Über galvanische Verbindungen oder über kabellose Verbindungen können Daten zwischen der Lese/Schreibvorrichtung und dem Datenspeichermodul ausgetauscht werden. Insbesondere eignet sich dafür beispielsweise ein RFID- Tag und eine entsprechende Lese/Schreibvorrichtung. Aber auch ein einfacher Barcode oder Matrixcode am Entnahmegefäss oder Dosierkopf kann der Identifikation des Dosiergutes dienen und durch einen Barcodeleser oder eine Kamera erfasst werden.

Einzelheiten der erfindungsgemässen Dosiervorrichtung ergeben sich anhand der Beschreibung der in den Zeichnungen dargestellten Ausführungsbeispiele. Es zeigen:
- Figur 1: eine Dosiervorrichtung in dreidimensionaler Ansicht, mit einem in die Antriebsvorrichtung einsetzten Dosierkopf in einer ersten Ausführung und mit einem Entnahmegefäss, welches mit dem Dosierkopf verbundenen ist, wobei der Dosierkopf und das Entnahmegefäss im Schnitt dargestellt sind und die Mittellängsachsen der Verschlusswelle und des Entnahmegefässes parallel zueinander angeordnet sind;
- Figur 2: einen Dosierkopf in einer zweiten Ausführung in Aufsicht im Schnitt, mit einem Entnahmegefäss, welches über einen Zwischenflansch mit dem Dosierkopf verbunden ist, sowie mit einem ersten Rührwerk und einem schematisch dargestellten, im Zufuhrschacht angeordneten Absperrorgan und einem mit dem Zufuhrschacht verbundener Gasanschluss;
- Figur 3: die Antriebsvorrichtung aus Figur 1 in dreidimensionaler Ansicht, mit einem in die Antriebsvorrichtung einsetzten Dosierkopf in einer dritten Ausführung mit einem ersten Rührwerk und mit einem Entnahmegefäss, welches mit dem Dosierkopf verbundenen ist, wobei der Dosierkopf und das Entnahmegefäss im Schnitt dargestellt sind und im Entnahmegefäss ein zweites Rührwerk angeordnet ist;
- Figur 4: einen Dosierkopf in einer vierten Ausführung in Aufsicht im Schnitt, mit einem Entnahmegefäss, welches direkt mit dem Dosierkopf verbunden ist, wobei die Mittellängsachse des Zufuhrschachtes und des Entnahmegefässes auf einer Linie angeordnet sind, im Zufuhrschacht eine Engstelle angeordnet ist sowie mit einem zusätzlichen Hohlraum im Gehäuse des Dosierkopfs, welcher Hohlraum mit dem Zufuhrschacht verbunden ist und mit einer die Feuchtigkeit aufnehmenden Substanz verfüllt ist,
- Figur 5: einen Dosierkopf in einer fünften Ausführung in dreidimensionaler Ansicht, mit zwei Entnahmegefässen verschiedener Länge und Ausgestaltung;
- Figur 6a: in dreidimensionaler Ansicht eine erste Ausführung des an der Verschlusswelle ausgebildeten Anschlages mit zwei Anfräsungen;
- Figur 6b: in dreidimensionaler Ansicht eine zweite Ausführung des an der Verschlusswelle ausgebildeten Anschlages mit drei Anfräsungen;
- Figur 6c: in dreidimensionaler Ansicht eine dritte Ausführung des an der Verschlusswelle ausgebildeten Anschlages mit einer Rille;
- Figur 7: den Zufuhrschacht im Schnitt in einer Ebene orthogonal zur Mittellängsachse des Zufuhrschachtes, wobei zwei eng zueinander angeordnete Siebeinsätze im Gehäuse gegeneinander verschiebbar gelagert sind wobei deren Durchbrüche im Wesentlichen im Zufuhrschacht angeordnet sind.

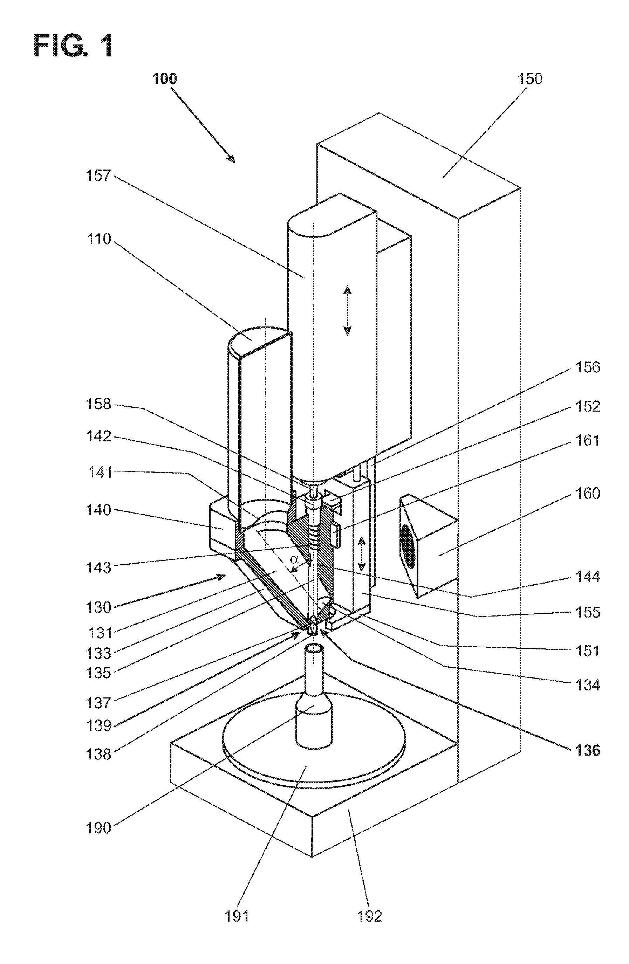

Die Figur 1 zeigt eine Dosiervorrichtung 100, die eine Antriebsvorrichtung 150 aufweist, in welche ein Dosierkopf 130 eingesetzt und aus dieser wieder entfernt werden kann. Mit dem Dosierkopf 130 ist über eine Aufnahme140 ein Entnahmegefäss 110 lösbar oder fest verbunden. Zwischen der Aufnahme 140 mit einem Durchbruch 141 und einer im Gehäuse 133 des Dosierkopfs 130 ausgebildeten Austrittsöffnung 139 ist ein Zufuhrschacht 131 angeordnet, durch welchen Dosiergut vom Entnahmegefäss 110 zur Austrittsöffnung 139 gelangen kann. Dieser Zufuhrschacht 131 ist zylinderförmig ausgebildet und weist im Bereich der Austrittsöffnung ein ebenes Schachtende 134 auf, wobei die Austrittsöffnung 139, wenn der Dosierkopf 130 in die Antriebsvorrichtung 150 eingesetzt ist, am tiefstgelegenen Punkt des Zufuhrschachtes 131 angeordnet ist, so dass das Dosiergut unter der Einwirkung der Schwerkraft durch die Zufuhrschacht- Wände im Betriebszustand der Dosiervorrichtung 100 zur Austrittsöffnung 139 geleitet wird. Vor dem Verbinden des Entnahmegefässes 110 mit dem Dosierkopf 130 wird das Entnahmegefäss 110 befüllt. Die Montage geschieht "über Kopf" das heisst die Austrittsöffnung 139 des Dosierkopfes 130 und die Öffnung des Entnahmegefässes 110 werden bei der Montage entgegen der im Betriebszustand vorgegebenen Richtung gehalten.

Das Gehäuse 133 des in die Antriebsvorrichtung 150 eingesetzten Dosierkopfs 130 liegt auf einem ersten Halteelement 151 auf, wird durch ein zweites Halteelement 152 gegen das erste Halteelement 151 gepresst und damit in der Antriebsvorrichtung 150 gehalten. Beide Halteelemente 151, 152 sind Bestandteil einer Aufnahmevorrichtung 155, welche über eine senkrecht angeordnete Linearführung 156 mit dem Gehäuse der Antriebsvorrichtung 150 verbunden ist und dadurch in der Höhe verstellbar ist, so dass bei in die Antriebsvorrichtung 150 eingesetztem Dosierkopf 130, Zielgefässe 190 verschiedener Länge unterhalb einer Austrittsöffnung 139 des Dosierkopfs 130 angeordnet werden können. Oberhalb der Aufnahmevorrichtung 155 ist eine Antriebseinheit 157 angeordnet, welche eine Antriebswelle 158 aufweist. Die Antriebseinheit 157 oder zumindest die Antriebswelle 158 ist relativ zur Aufnahmevorrichtung 155 in senkrechter Richtung linear verschiebbar. Im Gehäuse 133 des Dosierkopfs 130 ist eine Lager- und Durchtrittsstelle 144 ausgebildet, durch welche eine Verschlusswelle 135 drehbar und entlang ihrer Mittellängsachse linear verschiebbar gelagert ist. Die Mittellängsachse der Verschlusswelle 135 ist in spitzem Winkel α zur Mittellängsachse des Zufuhrschachtes 131 angeordnet, wobei der Scheitel des spitzen Winkels α im Wesentlichen gegen die Austrittsöffnung 139 zeigt. Die Verschlusswelle 135 kann nach dem Einsetzen des Dosierkopfs 133 in die Antriebsvorrichtung 150, beziehungsweise in die Aufnahmevorrichtung 155, über eine Kupplung 142 mit der Antriebswelle 158 gekoppelt werden. Selbstverständlich können alle bekannten form- oder kraftschlüssig wirkenden Kupplungen verwendet werden, deren Kupplungshälften auf einfache Weise trennbar sind. Bei der Wahl der Kupplung ist jedoch darauf zu achten, dass zwischen den Kupplungshälften während des normalen Dosierbetriebes keinen Schlupf entsteht, da dies je nach Dosierverfahren die Präzision der Dosiervorrichtung 100 beeinträchtigen kann.

Am gegen die Austrittsöffnung 139 gerichteten Ende der Verschlusswelle 135 ist ein Verschlusselement 136 angeordnet, welches einen zylinderförmigen Verschlussbereich 138 und einen diesem benachbart angeordneten Austragungsbereich 137 aufweist. Das Verschlusselement 136 ragt in die am Gehäuse 133 ausgebildete Austrittsöffnung 139 hinein. Wenn sich der Austragungsbereich 138 in der Austrittsöffnung 139 befindet, kann Dosiergut durch den Querschnitt, welcher durch die Kontur des Austragungsbereichs 138 und den Randbereich der Austrittsöffnung 139 begrenzt wird, ausgetragen werden. Ferner ist die Verschlusswelle 135 mit der Federkraft einer Feder 141 beaufschlagt, so dass die Verschlusswelle 135 beim Entkoppeln von der Antriebswelle 158 selbsttätig den Verschlussbereich 138 in die Austrittsöffnung 139 zurückführt und/oder in dieser hält.

Das Zielgefäss 190 steht auf dem Lastaufnehmer 191 einer Waage 192, deren Elektronik mit der Steuer- und Regelelektronik der Antriebsvorrichtung 150 verbunden ist. Des Weiteren ist im oder am Gehäuse 133 des Dosierkopfs 130 eine Sende/Empfängereinheit 161 mit einem Datenspeichermodul oder eine Identifikationsmarkierung angeordnet, deren Daten von einer Lesevorrichtung erfasst werden oder welcher mit einer Lese/Schreibvorrichtung 160 kommunizieren kann. Dies kann ein Barcode oder Matrixcode sein, welcher durch eine Kamera erfasst werden kann oder ein Datenspeichermodul welches über elektrische Verbindungen oder beispielsweise wie ein RFID- Tag, über eine drahtlose Verbindung mit der Elektronik der Dosiervorrichtung 100 verbunden ist.

Das Entnahmegefäss 110 in Figur 1 weist eine zylindrische Grundform auf. Grundsätzlich sind aber auch andere Entnahmegefäss- Formen mit beispielsweise quadratischem, sechs- oder achteckigem Aussen- und Innenquerschnitt möglich. Wie in Figur 1 dargestellt, ist die Mittellängsachse des Entnahmegefässes durch eine entsprechende Ausgestaltung der Aufnahme 140 parallel zur Mittellängsachse der Verschlusswelle 135 angeordnet. Dies bedeutet nicht, dass eine senkrechte Anordnung des Entnahmegefässes 110 zwingend notwendig ist. Die Mittellängsachse des Entnahmegefässes 110 kann eine beliebige Ausrichtung in Bezug zur Mittellängsachse der Verschlusswelle 135 und/oder der Mittellängsachse des Zufuhrschachtes 131 aufweisen, sofern durch die Anordnung eine durchgehende Verbindung vom Entnahmegefäss 110 über den Zufuhrschacht 131 zur Austrittsöffnung 139 besteht. Sofern im Betriebszustand die Aufnahme 140 oberhalb des am tiefsten liegenden Punktes des Entnahmegefässes 110 liegt, müssen zusätzliche Fördermittel im Entnahmegefäss 110 vorgesehen werden, damit das Dosiergut in den Zufuhrschacht 131 gelangen kann. Der Betriebszustand der Dosiervorrichtung 100 bezogen auf die mechanischen Komponenten ist dann hergestellt, wenn ein Dosierkopf 130 in die Antriebsvorrichtung 150 eingesetzt ist, die Verschlusswelle 135 mit der Antriebswelle 158 gekoppelt ist und ein Entnahmegefäss 110 mit dem Dosierkopf 130 verbunden ist.

In den nachfolgenden Figuren werden für identische Bauteile dieselben Bezugszeichen verwendet. Für diese Teile gelten die Beschreibungen in den vorangehenden Figuren.

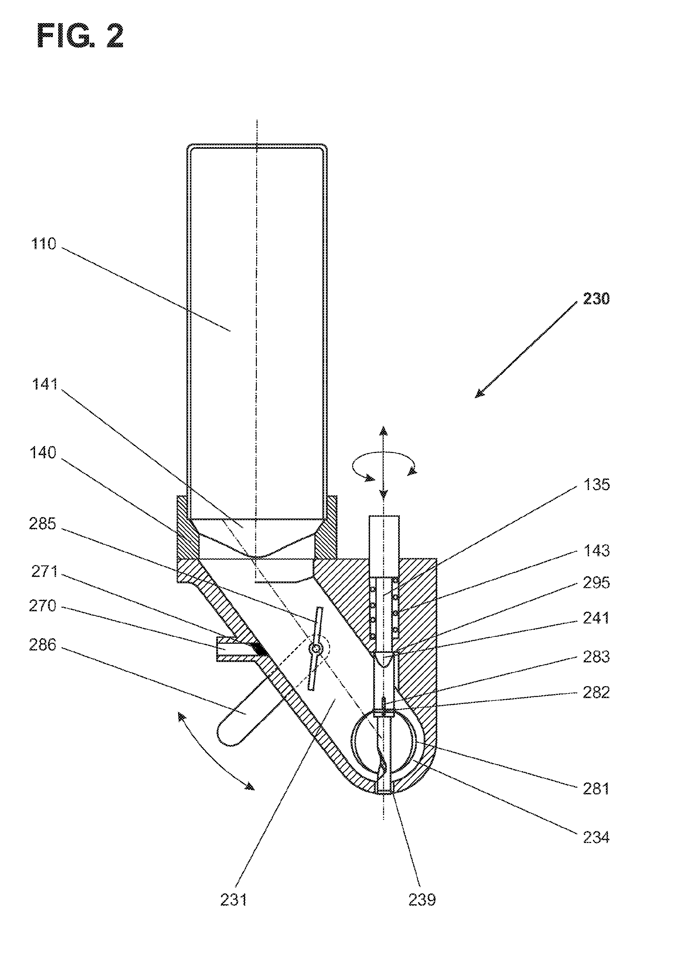

Die Figur 2 zeigt einen Dosierkopf 230 in einer zweiten Ausführung in Aufsicht im Schnitt, mit einem Entnahmegefäss 110, welches über einen Zwischenflansch 140 mit dem Dosierkopf 230 verbunden ist. Wie in der Figur 1 ist das Entnahmegefäss 110 über einen Durchbruch 141 im Zwischenflansch und über einen Zufuhrschacht 231 mit der Austrittsöffnung 239 verbunden. An Stelle eines ebenen Schachtendes wie in Figur 1 dargestellt, ist in Figur 2 das Schachtende 234 sphärisch ausgebildet. Dies ermöglicht den Einsatz eines ersten Rührwerks 281, da durch das sphärische Schachtende 234 eine rotationssymmetrisch freier Raum bezogen auf die Mittellängsachse der Verschlusswelle 135 ausgebildet ist. Das Rührwerk 281 ist über eine Ringführung 282 linear verschiebbar an der Verschlusswelle 135 gelagert. Dadurch lässt sich die Verschlusswelle 135 wie in Figur 2 bereits beschrieben linear verschieben ohne dass das Rührwerk 281 gegen die Schachtwand des Zufuhrschachtes 231 gepresst wird. Das Drehmoment der Verschlusswelle 135 wird durch eine daran ausgebildete Nut 283 an die Ringführung 282 und damit an das Rührwerk 281 übertragen.

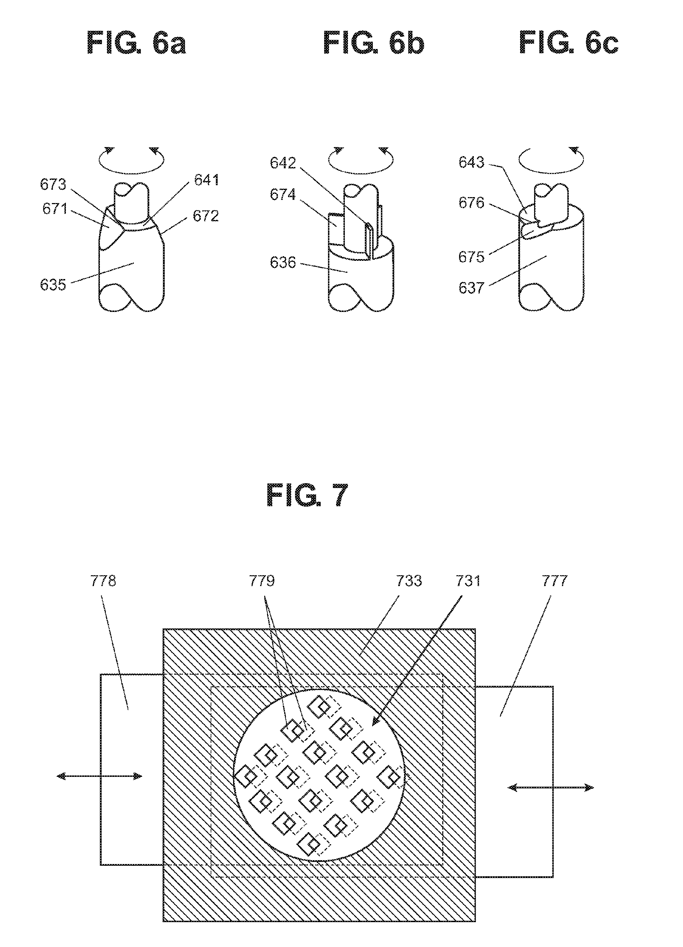

Die Verschlusswelle 135 ist, wie schon in Figur 1 beschrieben, mit der Federkraft einer Feder 143 beaufschlagt, so dass nach dem Entfernen des Dosierkopfs 230 aus der Antriebsvorrichtung das Verschlusselement die Austrittsöffnung 239 wie in der Figur 2 dargestellt, verschliesst. Zwecks eindeutiger Definition dieser Verschlussposition sollte die Verschlussachse 135 einen Anschlag 241 aufweisen, welcher durch die Federkraft der Feder 143 gegen einen im Zufuhrschacht 231 ausgebildeten Gegenanschlag 295 gedrückt wird und an diesem Gegenanschlag 295 bei Erreichen der Verschlussposition anliegt. Sobald sich die gewünschte Zielmenge an Dosiergut im Zielgefäss befindet, sollte sich die Austrittsöffnung sicher schliessen lassen. Da sich bei dieser Ausführung zwischen dem Anschlag 241 und dem Gegenanschlag 295 Dosiergut festsetzen kann, besteht die Möglichkeit, dass das zwischen den Anschlägen eingeklemmte Dosiergut eine vollständige Schliessung verhindert. Aus diesem Grund weist der Anschlag 241 eine geeignete Ausgestaltung auf, um das eingeklemmte Dosiergut vermittels Rotation der Verschlusswelle 135 zwischen den Anschlägen zu entfernen. Drei mögliche Ausgestaltungen sind in den Figuren 6a bis 6c dargestellt und werden weiter unten ausführlich beschrieben.

Ferner ist im Zufuhrschacht 231 ein schematisch dargestelltes Absperrorgan 285 angeordnet, welches über ein ebenfalls schematisch dargestelltes Betätigungsorgan 286 geöffnet oder geschlossen werden kann. Das Absperrorgan 285 kann in den bekannten Ausgestaltungen wie Hahnreiber, Drehschieber, linearer Schieber und dergleichen ausgebildet sein. Die Funktion des Absperrorgans 285 kann vielfältig sein. So kann es den Durchfluss des Dosierguts bremsen, aber auch das Dosiergut gasdicht gegen die Umgebung abschliessen, wenn die Einheit aus Entnahmegefäss 110 und Dosierkopf 230 gleichzeitig als Lager- und Transportbehälter für das Dosiergut eingesetzt werden soll. Zu diesem Zwecke sollte das Dosiergut, welches im Zufuhrschacht 231 vorhanden ist zuerst in das Entnahmegefäss 110 zurückgeschüttelt werden, bevor das Absperrorgan geschlossen wird.

Auf Umgebungseinflüsse wie eindringende Feuchtigkeit reagierendes Dosiergut muss zwecks seiner Lagerung entsprechend behandelt werden. Aus diesem Grund kann der Zufuhrschacht 231 zusätzlich über einen schematisch dargestellten Gasanschluss 270 verfügen, wobei dieser gegen das Eindringen von Dosiergut durch eine gasdurchlässige Membran 271 abgesichert ist. Durch den Gasanschluss 270 lässt sich der Innenraum des Entnahmegefässes 110 und des Dosierkopfs 230 mit einem Inertgas fluten, wodurch das Eindringen eines anderen gasförmigen Mediums, beispielsweise Luft verhindert werden kann. Selbstverständlich kann das Dosiergut auch durch ein reaktives Gas begast werden, um beispielsweise Reste eines für die Umwelt gefährlichen Dosierguts zwecks Dekontamination des entleerten Entnahmegefässes 110 und Dosierkopfes 230 unschädlich zu machen. Selbstverständlich kann die Membran 271 auch so ausgelegt werden, dass sich Flüssigkeiten in den Zufuhrschacht 231 einleiten lassen um den Dosierkopf 230 zu spülen. Bevor das Dosiergut ausgetragen wird könnte dann mittels rotieren des Rührwerks 281 die Begasung unterstützt werden. Bei geeigneter Ausbildung des Gasanschlusses kann das in den Zufuhrschacht 231 eintretende Gas auch die Förderung pappigen oder klebrigen Dosiergutes im Zufuhrschacht 231 oder den Durchtritt des Dosiergutes durch die Austrittsöffnung 239 unterstützen.

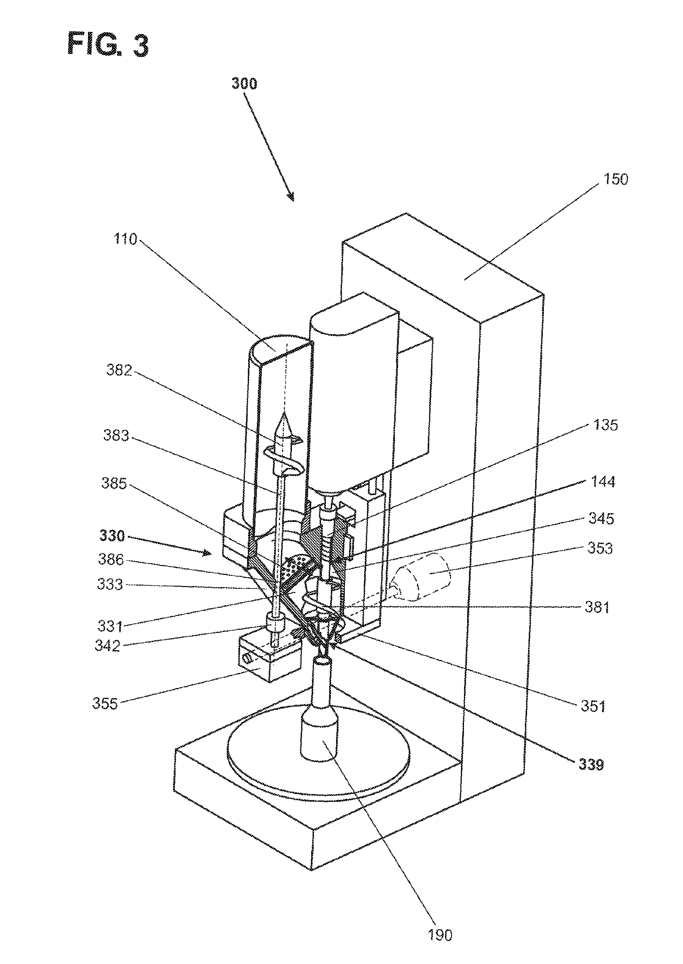

Die Figur 3 zeigt eine Dosiervorrichtung 300, welche die Antriebsvorrichtung 150 aus Figur 1 in dreidimensionaler Ansicht und einen in die Antriebsvorrichtung 150 einsetzten und im Schnitt dargestellten Dosierkopf 330 aufweist. Wie in Figur 1, ist die Dosiervorrichtung in Figur 3 ebenfalls im Betriebszustand dargestellt, wobei die Austrittsöffnung 339 geöffnet ist. In dieser Stellung kann Dosiergut durch die Austrittsöffnung 339 in das Zielgefäss 190 gelangen.

Um für ein grösseres Rührwerk 381 genügend Freiraum zu schaffen, so dass dieses mit der Verschlusswelle 135 um deren Mittellängsachse rotieren kann, ist im Gehäuse 333 ein gegen die Lager- und Durchtrittsstelle 144 weisender Dom 345 ausgebildet. Dieser Dom 345 schützt die Lager- und Durchtrittsstelle 144 zusätzlich vor dem Eindringen von Dosiergut, da der Lagerspalt zwischen der Verschlusswelle 135 und dem Gehäuse 333 nicht direkt im Zufuhrschacht 331 endet und der Lagerspalt dadurch nicht direkt mit dem durch den Zufuhrschacht 331 fliessenden Dosiergut in Berührung kommt. Die Rührflügel des zweiten Rührwerks 381 sind derart ausgebildet, dass das Dosiergut aus dem Zufuhrschacht 331 geschält und gegen die Verschlusswelle 135 und die Austrittsöffnung 339 hin gefördert wird.

Im Zufuhrschacht 331 ist ein erster Siebeinsatz 385 und ein zweiter Siebeinsatz 386 linear und orthogonal zur Mittellängsachse des Zufuhrschachts 331 verschiebbar angeordnet. Die Siebeinsätze 385, 386 verfügen über mehrere Durchbrüche, wobei die Querschnittsfläche der einzelnen Durchbrüche gegen die Austrittsöffnung 339 hin abnimmt. Durch diese Ausgestaltung kann die Korngrösse des Dosiergutes während des Dosiervorganges selektiert werden. Durch die Möglichkeit der linearen Verschiebbarkeit der Siebeinsätze 385, 386 orthogonal zur Mittellängsachse des Zufuhrschachts 331, können die einzelnen Korngrössekategorien in aufsteigender Reihenfolge ausgewählt werden. Dabei wird durch einen aus dem Zufuhrschacht 331 ganz oder teilweise herausgezogenen Siebeinsatz 385, 386 der Zufuhrschacht 331 im Bereich des jeweiligen Siebeinsatzes für alle Korngrössen freigegeben. Zudem lassen sich die Siebeinsätze 385, 386 dadurch auswechseln beziehungsweise reinigen. Es versteht sich von selbst, dass auch mehr als zwei oder nur ein Siebeinsatz verwendet werden kann.

Damit insbesondere klebriges oder pappiges Dosiergut ohne hängen zu bleiben vom Entnahmegefäss 110 über den Zufuhrschacht 331 zur Austrittsöffnung gelangen kann, kann im Entnahmegefäss ein zweites Rührwerk 382 angeordnet sein. Dieses ist mit der im Gehäuse 333 drehbar gelagerten Rührwerkwelle 383 verbunden. Die Rührwerkwelle 383 wird über eine Kupplung 342 mit der Ausgangswelle eines Winkelgetriebekastens 355 verbunden. Der Winkelgetriebekasten 355 ist mit dem ersten Halteelement 351 verbunden, welches zu diesem Zwecke im Vergleich zum in Figur 1 dargestellten ersten Halteelement 151 länger ausgebildet ist. Die Eingangswelle des Winkelgetriebekastens 355 ist mit einem Antriebsmotor 353 verbunden, welcher in Figur 3 schematisch dargestellt ist. Selbstverständlich sind zum Antreiben des zweiten Rührwerks 382 auch andere Antriebskonzepte denkbar, beispielsweise kann an Stelle des Winkelgetriebekastens 355 der Antriebsmotor 353 direkt mit der Rührwerkwelle 383 verbunden sein.

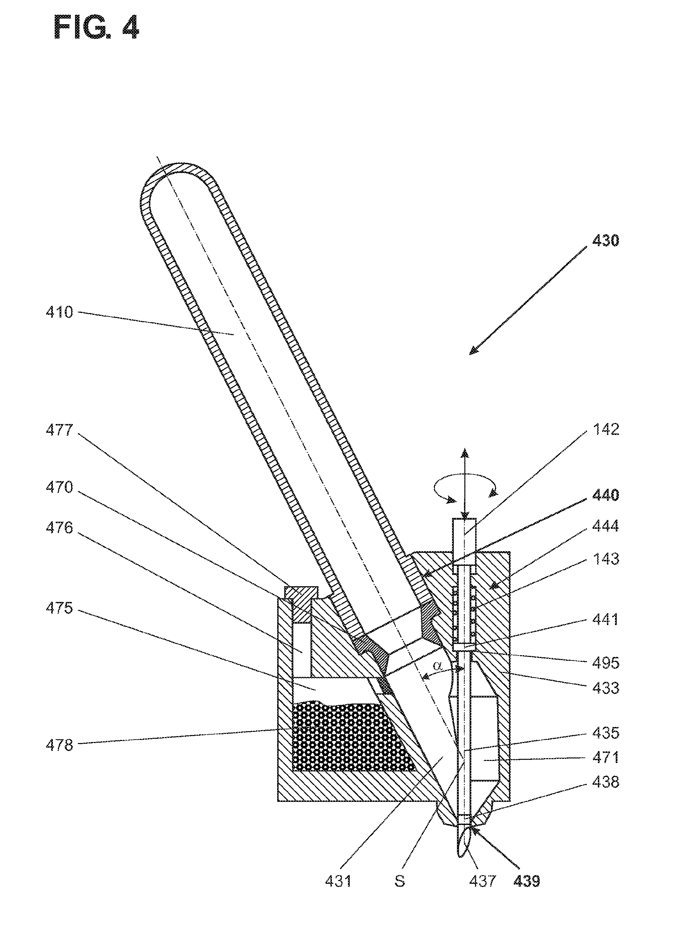

Figur 4 zeigt einen Dosierkopf 430 in einer vierten Ausführung in Aufsicht und im Schnitt. Der Dosierkopf 430 weist ein Gehäuse 433 auf, in welchem ein Zufuhrschacht 431 ausgebildet ist. Am Gehäuse 433 ist zudem eine Aufnahme 440 ausgeformt, so dass das Gehäuse 433 und die Aufnahme 440 einstückig ausgebildet sind. Mit der Aufnahme 440 ist ein Entnahmegefäss 410 direkt verbunden, wobei das Entnahmegefässes 410 und der Zufuhrschacht 431 eine gemeinsame Mittellängsachse aufweisen. Eine Verschlusswelle 435 ist in einer Lager- und Durchtrittsstelle 444 welche im Gehäuse 433 ausgebildet ist, drehbar und linear verschiebbar gelagert. Zwischen der Lager- und Durchtrittsstelle 444 und einer Austrittsöffnung 439 ist eine rotationssymmetrische Aussparung 471 ausgebildet, in welcher sich bei Bedarf ein mit der Verschlusswelle 435 verbindbares Rührwerk unterbringen lässt. Der Zufuhrschacht 431 ist wie in den vorangehenden Figuren in spitzem Winkel α zur Verschlusswelle 435 angeordnet, wobei sich die Mittellängsachsen in einem Punkt S schneiden, welcher im Bereich der rotationssymmetrischen Aussparung 471 angeordnet ist. Im Unterschied zu den vorangehend beschriebenen Figuren, weist die Verschlusswelle 435 den Austragungsbereich 437 an deren Ende auf, während der Verschlussbereich 438 näher zur Kupplung 142 hin angeordnet ist. Beim Entkoppeln der Verschlusswelle 435 von der Antriebswelle, drückt eine Feder 143 einen an der Verschlusswelle ausgebildeter Anschlag 441 gegen einen im Gehäuse 333 beziehungsweise in der Lager- und Durchtrittsstelle 444 ausgebildeten Gegenanschlag 495. Die Anschläge 441, 495 sind derart auf den Verschlussbereich 438 und die Austrittsöffnung 439 abgestimmt, dass bei der gegenseitigen Anlage der Anschläge 441, 495 die Austrittsöffnung 439 durch den Verschlussbereich 438 verschlossen wird. Ferner ist im Zufuhrschacht 431 eine Engstelle 470 angeordnet, um zu verhindern, dass sich Dosiergut mit einer sehr hohen Fliessfähigkeit beim Dosiervorgang zu schnell in das Zielgefäss ergiesst. Durch diese Massnahme kann der Steuer- und Regeleinrichtung der Dosiervorrichtung die erforderliche Reaktionszeit zur Verfügung gestellt werden. Des Weiteren ist im Gehäuse 433 ein Hohlraum 475 ausgebildet, welcher über eine Einfüllöffnung 476 mit einer die Feuchtigkeit aufnehmenden Substanz 478 verfüllt ist. Die Einfüllöffnung 476 ist mit einem Stopfen 477 hermetisch verschlossen. Der Hohlraum ist über eine gasdurchlässige Verbindung mit dem Zufuhrschacht verbunden. Durch diese Anordnung kann dem Dosiergut die Feuchtigkeit entzogen werden oder verhindert werden, dass durch eintretende Feuchtigkeit das Dosiergut beispielsweise Klumpen bildet.

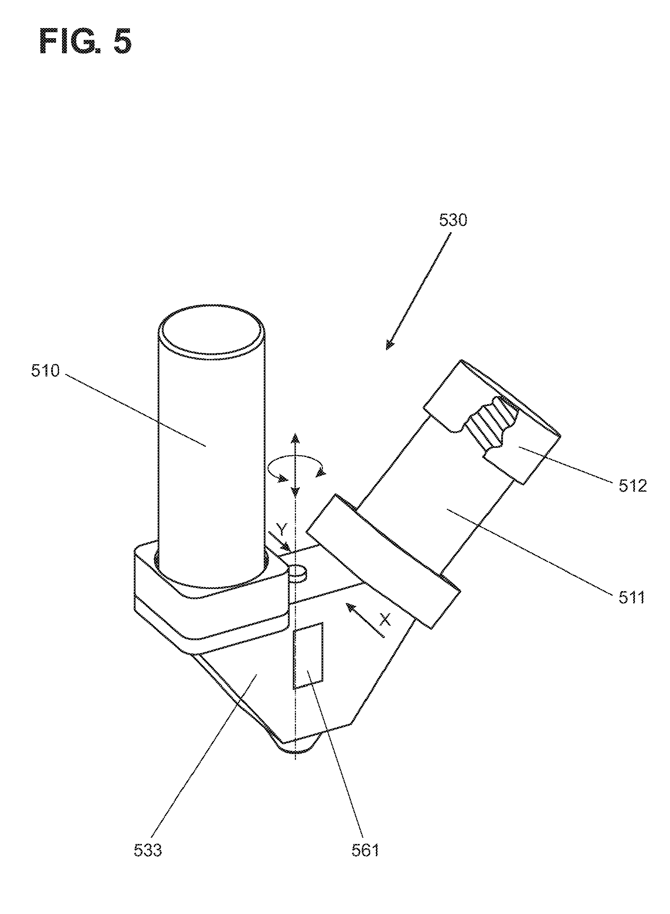

In Figur 5 ist ein Dosierkopf 530 in einer fünften Ausführung in dreidimensionaler Ansicht, mit einem ersten Entnahmegefäss 510 und einem zweiten Entnahmegefäss 511 dargestellt. Die Ausgestaltung innerhalb des Gehäuses 533 entspricht, abgesehen davon dass zwei Zufuhrschächte vorhanden sind, einem der vorangegangenen Ausführungsbeispiele der Dosierköpfe der Figuren 1 bis 4, beziehungsweise kann eine beliebige Kombination der einzelnen, dargestellten Ausführungsmerkmale aufweisen. Es versteht sich von selbst, dass der Dosierkopf 530 mit seinen zwei Entnahmegefässen 510, 511 lediglich in zwei unterschiedlichen Positionen in die Antriebsvorrichtung eingesetzt werden kann und nicht wie die vorangehend beschriebenen Dosierköpfe aus den Figuren 1, 2 und 4, welche grundsätzlich in drei verschiedenen Positionen mit der Antriebsvorrichtung verbunden werden können. Die beiden Pfeile X und Y geben die Anlageflächen an, wobei nur eine dieser Anlageflächen des Gehäuses 533 an der Aufnahmevorrichtung anliegt. Die Sende/Empfängereinheit 561 nimmt bei in die Antriebsvorrichtung eingesetztem Dosierkopf 533 dieselbe Position ein, wie die Sende/Empfängereinheit 161, welche in Figur 1 dargestellt ist. Selbstverständlich sind auch mehr als zwei Entnahmegefässe pro Dosierkopf denkbar.

Um ein Nachfüllen der Entnahmegefässe auch bei in die Antriebsvorrichtung eingesetztem Dosierkopf zu ermöglichen, weist das zweite Entnahmegefäss 511 an dem, dem Dosierkopf 533 entgegengesetzten Ende einen Verschlussdeckel 512 auf. Selbstverständlich können in allen vorangehend beschriebenen Beispielen die Entnahmegefässe ebenfalls einen Verschlussdeckel 512 zwecks Be- oder Nachfüllung aufweisen. Sofern der Dosierkopf wie in Figur 2 dargestellt mit in den Zufuhrschächten angeordneten Absperrorganen ausgestattet ist, lassen sich die einzelnen Entnahmegefässe beliebig zu- und abschalten.

Die Figuren 6a bis 6c zeigen verschiedene Ausführungen des an der Verschlusswelle ausgebildeten Anschlages in dreidimensionaler Ansicht. In Figur 6a wird der Anschlag 641 beziehungsweise dessen Anschlagfläche durch eine erste Anfräsung 671 und eine zweite Anfräsung 672 reduziert. Dadurch werden im Bereich des Anschlages 641 Freistellungen und zwei Schabkanten 673 gebildet, durch welche zwischen dem Anschlag 673 und dem in Figur 2 dargestellten Gegenanschlag eingeklemmtes Dosiergut entfernt kann. Unterstützt wird dieser Effekt durch die Rotation der Verschlusswelle 635, wodurch eine Relativbewegung des Anschlages 641 gegenüber dem ortsfesten Gegenanschlag erzeugt wird. Selbstverständlich kann auch nur eine Anfräsung 671 oder können auch mehr als zwei Anfräsungen 671, 672 vorhanden sein.

In Figur 6b ist ein zweites Ausführungsbeispiel dargestellt. Die Anschlagfläche des an der Verschlusswelle 636 ausgebildeten Anschlags 642 wurde bis auf drei dünne Stege reduziert. Durch die nunmehr senkrechten Schabflächen 674 wird im Vergleich zum in Figur 6a dargestellten Ausführungsbeispiel die Betriebssicherheit erheblich gesteigert. Die notwendige Anschlagfläche ergibt sich aus den maximal zulässigen Flächenpressungen des Anschlags und des Gegenanschlags sowie aus der Federkraft der Feder aus Figur 2. Sowohl die in Figur 6a als auch in Figur 6b dargestellten Ausführungsbeispiele sind in ihrer Funktion drehrichtungsunabhängig. Selbstverständlich kann auch hier nur ein Steg beziehungsweise können mehrere Stege vorhanden sein.

Die Anschlagfläche des Anschlags 643 der in der Figur 6c dargestellten Verschlusswelle 637 weist eine Rille 675 auf. Durch die Rille 675 wird eine Schnittkante 676 gebildet, welche im Vergleich zu den vorangehend beschriebenen Ausführungsbeispielen im Entfernen von eingeklemmtem Dosiergut noch einmal leistungsfähiger ist. Jedoch muss darauf geachtet werden, dass der Gegenanschlag nicht abgetragen und zerstört wird. Das Ausführungsbeispiel ist nicht dahingehend limitierend zu verstehen, dass nur eine Rille vorhanden ist. Es können selbstverständlich auch mehrere Rillen ausgebildet sein.

Die Figur 7 zeigt einen Zufuhrschacht 731 im Schnitt durch ein Gehäuse 733. Die Schnittebene ist orthogonal zur Mittellängsachse des Zufuhrschachtes 731 gewählt. Wie vorangehend in der Figur 3 ausführlich beschrieben, kann der Zufuhrschacht mit Siebeinsätzen versehen sein. Damit nicht mehrere Siebeinsätze angeordnet werden müssen, können auch nur ein erster Siebeinsatz 777 und ein zweiter Siebeinsatz 778 eng zueinander angeordnet und im Gehäuse 733 gegeneinander verschiebbar gelagert sein. Deren Durchbrüche 779 sind im Wesentlichen im Zufuhrschacht 731 angeordnet. Durch das Verschieben der Siebeinsätze 777, 778 werden die einzelnen Durchbrüche teilweise abgedeckt, wobei bei vollständiger Deckungsgleichheit der Durchbrüche 779 die maximale dem Durchbruchquerschnitt entsprechende Korngrösse des Dosiergutes durch die Siebeinsätze 777, 778 zur Austragungsöffnung gelangt, während bei vollständiger Abdeckung der Durchbrüche 779 die Siebeinsätze 777, 778 als Absperrorgan dienen. Die in Figur 7 dargestellten Siebeinsätze 777, 778 sind beide relativ zum Gehäuse 733 linear verschiebbar. Dadurch sind beide Siebeinsätze 777, 778 herausnehmbar und reinigbar. Es ist aber auch möglich, dass der erste Siebeinsatz 777 starr mit dem Gehäuse verbunden ist und nur der zweite Siebeinsatz 778 linear verschiebbar ist. Selbstverständlich sind auch Lösungen, bei denen der erste Siebeinsatz 777 gegenüber dem zweiten Siebeinsatz 778 um einen Drehpunkt gedreht oder verschwenkt werden kann in diesem Aspekt der Erfindung mit eingeschlossen.

### Bezugszeichenliste

- 300, 100: Dosiervorrichtung
- 511, 510, 410, 110: Entnahmegefäss
- 530, 430, 330, 230, 130: Dosierkopf
- 731, 431, 331, 231, 131: Zufuhrschacht
- 733, 533, 333, 133: Gehäuse
- 134: ebenes Schachtende
- 637, 636, 635, 435, 135: Verschlusswelle
- 136: Verschlusselement
- 437, 137: Austragungsbereich
- 438, 138: Verschlussbereich
- 439, 339, 239, 139: Austrittsöffnung
- 440, 140: Aufnahme
- 141: Durchbruch
- 342, 142: Kupplung
- 143: Feder
- 444, 144: Lager- und Durchtrittsstelle
- 150: Antriebsvorrichtung
- 351, 151: erstes Halteelement
- 152: zweites Halteelement
- 155: Aufnahmevorrichtung
- 156: Linearführung
- 157: Antriebseinheit
- 158: Antriebswelle
- 160: Lese/Schreibvorrichtung
- 161: Sende/Empfängereinheit mit Datenspeichermodul
- 190: Zielgefäss
- 191: Lastaufnehmer
- 192: Waage
- 234: sphärisches Schachtende
- 643, 642, 641, 441, 241: Anschlag
- 381, 181: erstes Rührwerk
- 282: Ringführung
- 283: Nut
- 285: Absperrorgan
- 286: Betätigungsorgan
- 270: Gasanschluss
- 271: gasdurchlässige Membran
- 495,295: Gegenanschlag
- 345: Dom
- 353: Antriebsmotor
- 355: Winkelgetriebeeinheit
- 382: zweites Rührwerk
- 383: Rührwerkwelle
- 777, 385: erster Siebeinsatz
- 778, 386: zweiter Siebeinsatz
- 470: Engstelle
- 471: rotationssymmetrische Aussparung
- 475: Hohlraum
- 476: Einfüllöffnung
- 477: Stopfen
- 478: Feuchtigkeit aufnehmende Substanz
- 479: gasdurchlässige Verbindung
- 512: Verschlussdeckel
- 671: erste Anfräsung
- 672: zweite Anfräsung
- 673: Schabkante
- 674: Schabfläche
- 675: Rille
- 676: Schnittkante
- 779: Durchbruch

## Patentansprüche

1. Dosiervorrichtung (100, 300) für pulver- oder pastenförmiges Dosiergut mit einer Antriebsvorrichtung (150), mit mindestens einem in die Antriebsvorrichtung (150) einsetzbaren Dosierkopf (130) und mit mindestens einem Entnahmegefäss (110), das über mindestens eine am Dosierkopf (130) ausgebildete oder damit verbundene Aufnahme (140, 440) mit dem Dosierkopf (130) verbindbar ist, wobei der Dosierkopf (130) ein Gehäuse (133) mit einer im Betriebszustand nach unten gerichteten Austrittsöffnung (139) und einer nach oben gerichteten Lager- und Durchtrittsstelle (144) aufweist, in welcher Lager- und Durchtrittsstelle (144) eine Verschlusswelle (135), deren Mittellängsachse im Betriebszustand im Wesentlichen vertikal verläuft, drehbar und entlang ihrer Mittellängsachse verschiebbar gelagert ist, die Verschlusswelle (135) mit einem im Bereich der Austrittsöffnung (139) angeordneten Verschlusselement (136) verbunden ist und die Verschlusswelle (135) über mindestens eine Kupplung (142) mit einer Antriebswelle (158) der Antriebseinheit (157) kuppelbar ist, **dadurch gekennzeichnet,**
• **dass** im Gehäuse (133) des Dosierkopfs (130) mindestens ein Zufuhrschacht (131) zwischen der mindestens einen Aufnahme (140, 440) und der Austrittsöffnung (139) ausgebildet ist,
• **dass** die Mittellängsachse des mindestens einen Zufuhrschachts (131) in spitzem Winkel α zur Mittellängsachse der Verschlusswelle (135) angeordnet ist, wobei dessen Winkelweite grösser als 0°und kleiner als 90° ist und dessen Winkelscheitel im Betriebszustand gegen unten gerichtet ist,
• **dass** die Mittellängsachse der Verschlusswelle (135) ausserhalb der mindestens einen Aufnahme (140, 440) verläuft und
• **dass** das mindestens eine Entnahmegefäss (110) im Betriebszustand in seiner räumlichen Anordnung mindestens teilweise seitlich der Antriebswelle (158) und/oder der Verschlusswelle (135) angeordnet ist.

2. Dosiervorrichtung (100) nach Anspruch 1, **dadurch gekennzeichnet, dass** die Austrittsöffnung (439) mit kreisförmigem Querschnitt versehenen und das Verschlusselement in seiner Grundform zylinderförmig ausgebildet ist und einen dem Verschliessen der Austrittsöffnung (439) dienenden zylinderförmigen Verschlussbereich (438) und einen diesem benachbart angeordneten der Austragung von Dosiergut dienenden Austragungsbereich (437) aufweist, welcher Austragungsbereich (437) sich im Betriebszustand der Dosiervorrichtung (100) im unteren Bereich des Verschlusselements befindet, welcher eine Endfläche aufweist, die gegenüber einer Ebene orthogonal zur Mittellängsachse schräg verläuft, wobei der tiefstgelegene Punkt dieser Endfläche, eine Spitze bildend, mit einem Punkt der Zylindermantelfläche zusammenfällt und der höchstgelegene Punkt ebenfalls mit einem Punkt der Zylindermantelfläche zusammenfällt.

3. Dosiervorrichtung (100) nach Anspruch 1, **dadurch gekennzeichnet, dass** die Austrittsöffnung (139) mit kreisförmigem Querschnitt versehenen und das Verschlusselement (136) in seiner Grundform zylinderförmig ausgebildet ist, mindestens einen dem Verschliessen der Austrittsöffnung (139) dienenden Verschlussbereich (138) und einen diesem benachbart angeordneten der Austragung von Dosiergut dienenden Austragungsbereich (137) aufweist, wobei der Austragungsbereich (137) mit mindestens einer vom Zylindermantel ausgehenden Vertiefung versehen ist.

4. Dosiervorrichtung (300) nach einem der Ansprüche 1 bis 3, **dadurch gekennzeichnet, dass** im Gehäuse (333) eine zwischen der Austrittsöffnung (339) und dem Zufuhrschacht (331) angeordnete Aussparung (471) für ein mit der Verschlusswelle (135) verbundenes Rührwerk (381) rotationssymmetrisch zur Mittellängsachse der Verschlusswelle (135) ausgebildet ist.

5. Dosiervorrichtung (300) nach Anspruch 4 **dadurch gekennzeichnet, dass** das Rührwerk (381) zumindest einen Rührflügel aufweist, dessen Kreisbahn um die Mittellängsachse der Verschlusswelle (135) am Zufuhrschacht (331) vorbeiführt, wobei der Rührflügel eine, dem Abschälen des aus dem Zufuhrschacht (331) in die Aussparung eintretenden pulver- oder pastenförmigen Dosierguts dienende und gegen die Mittellängsachse und/oder zur Austrittsöffnung (339) hin fördernde Flügelstellung aufweist.

6. Dosiervorrichtung (300) nach Anspruch 5 **dadurch gekennzeichnet, dass** der mindestens eine Rührflügel des Rührwerks (381) zumindest an zwei Stellen mit der Verschlusswelle (135) und/oder dem Verschlusselement (136) formschlüssig verbunden ist.

7. Dosiervorrichtung (100) nach einem der Ansprüche 1 bis 6, **dadurch gekennzeichnet, dass** sich die Mittellängsachse des mindestens einen Zufuhrschachts (431) und die Mittellängsachse der Verschlusswelle (435) in einem Schnittpunkt (S) schneiden und der Schnittpunkt (S) im Bereich der rotationssymmetrischen Aussparung (471) angeordnet ist.

8. Dosiervorrichtung (300) nach einem der Ansprüche 1 bis 7, **dadurch gekennzeichnet, dass** im Gehäuse (333) ein rotationssymmetrisch zur Mittellängsachse der Verschlusswelle (135) und gegen die Lager- und Durchtrittsstelle (144) weisender Dom (345) ausgebildet ist.

9. Dosiervorrichtung (100) nach einem der Ansprüche 1 bis 8, **dadurch gekennzeichnet, dass** die Verschlusswelle (135) mit einer im Gehäuse (133) abgestützten Feder (143) beaufschlagt ist, die federbeaufschlagte Verschlusswelle (135) einen die axiale Verschiebung in Richtung der Lager-und Durchtrittsstelle (144) begrenzenden Anschlag (241) aufweist und in der Lager- und Durchtrittsstelle (144), im Zufuhrschacht (131), in der rotationssymmetrischen Aussparung (471) oder im Dom (345) ein der Definition der Verschlussposition dienender Gegenanschlag (295) ausgebildet ist, in welcher Verschlussposition ein Verschlussbereich (138) des Verschlusselements (136) die Austrittsöffnung (139) verschliesst.

10. Dosiervorrichtung (100) nach Anspruch 9, **dadurch gekennzeichnet, dass** am Anschlag (241) oder auf dessen Berührungsfläche mit dem Gegenanschlag mindestens eine der Entfernung von Dosiergut zwischen Anschlag und Gegenanschlag dienende Schabkante (673), Schabfläche (674) oder Schnittkante(676) ausgebildet ist.

11. Dosiervorrichtung (100) nach einem der Ansprüche 1 bis 10, **dadurch gekennzeichnet, dass** der mindestens eine Zufuhrschacht (231) mit einem von aussen betätigbaren Absperrorgan (285) versehen ist.

12. Dosiervorrichtung (100) nach einem der Ansprüche 1 bis 11, **dadurch gekennzeichnet, dass** im Gehäuse (133) mindestens ein Gasanschluss (270) angeordnet ist, der über eine gasdurchlässige Verbindung (271) mit dem Zufuhrschacht (231) verbunden ist.

13. Dosiervorrichtung (100) nach einem der Ansprüche 1 bis 12, **dadurch gekennzeichnet, dass** im Gehäuse (433) ein zusätzlicher Hohlraum (475) mit einer gasdurchlässigen Verbindung (479) zum Zufuhrschacht (431) vorhanden ist, welche mit einer die Feuchtigkeit aufnehmenden Substanz (478) verfüllt ist.

14. Dosiervorrichtung (100) nach Anspruch 12 oder 13, **dadurch gekennzeichnet, dass** die gasdurchlässige Verbindung (479) eine Bohrung und/oder oder eine gasdurchlässige Membran (271) ist.

15. Dosiervorrichtung (100) nach einem der Ansprüche 1 bis 14, **dadurch gekennzeichnet, dass** der mindestens eine Zufuhrschacht (131) eine der Beeinflussung der Fliessgeschwindigkeit des Dosiergutes dienende Engstelle (470) aufweist.

16. Dosiervorrichtung (100) nach einem der Ansprüche 1 bis 15, **dadurch gekennzeichnet, dass** der mindestens eine Zufuhrschacht (331) mindestens einen Siebeinsatz (385, 386) aufweist.

17. Dosiervorrichtung (100) nach einem der Ansprüche 1 bis 16, **dadurch gekennzeichnet, dass** der mindestens eine Zufuhrschacht (731) zwei benachbart zueinander angeordnete, gegeneinander verdrehbare, verschwenkbare oder verschiebbare Siebeinsätze (777, 778) aufweist.

18. Dosiervorrichtung (100) nach einem der Ansprüche 1 bis 17, **dadurch gekennzeichnet, dass** verschieden ausgestaltete Aufnahmen (140) als Adapter für Entnahmegefässe (110, 410, 510, 511) mit unterschiedlichen Anschlussdimensionen mit dem Gehäuse (133) verbindbar sind.

19. Dosiervorrichtung (100) nach einem der Ansprüche 1 bis 18, **dadurch gekennzeichnet, dass** im betriebsbereiten Zustand der Dosiervorrichtung (100) die Antriebswelle (158) und die Verschlusswelle (135) eine gemeinsame Mittellängsachse aufweisen.

20. Dosiervorrichtung (100) nach einem der Ansprüche 1 bis 19, **dadurch gekennzeichnet, dass** im Entnahmegefäss (110) zusätzliche Fördermittel, insbesondere ein zweites Rührwerk (382), vorhanden sind.

21. Dosiervorrichtung (100) nach einem der Ansprüche 1 bis 20, **dadurch gekennzeichnet, dass** sich bei in den Dosierkopf (130) eingesetztem Entnahmegefäss (110) die Mittellängsachse des mindestens einen Entnahmegefässes (110) mit der Mittellängsachse des zugeordneten, mindestens einen Zufuhrschachts (131) im Bereich der Aufnahme (140) in einem Punkt schneidet, wobei der Winkel zwischen den Mittellängsachsen beliebig gross sein kann.

22. Dosiervorrichtung (100) nach einem der Ansprüche 1 bis 21, **dadurch gekennzeichnet, dass** bei in den Dosierkopf (430) eingesetztem Entnahmegefäss (410) das mindestens eine Entnahmegefäss (410) und der zugeordnete, mindestens eine Zufuhrschacht (431) eine gemeinsame Mittellängsachse aufweisen.

23. Dosiervorrichtung (100) nach einem der Ansprüche 1 bis 21, **dadurch gekennzeichnet, dass** bei in den Dosierkopf (130) eingesetztem Entnahmegefäss (110) die Mittellängsachse der Verschlusswelle (135) und die Mittellängsachse des Entnahmegefässes (110) parallel zueinander angeordnet sind.

24. Dosiervorrichtung (100) nach einem der Ansprüche 1 bis 23, **dadurch gekennzeichnet, dass** der Zufuhrschacht (131) in einer Ebene orthogonal zur Mittellängsachse des Zufuhrschachts (131) einen ovalen oder kreisrunden Querschnitt aufweist.

25. Dosiervorrichtung (100) nach einem der Ansprüche 1 bis 24, **dadurch gekennzeichnet, dass** das Entnahmegefäss (511) einen rohrförmigen Körper aufweist, an dessen erster Öffnung ein in die Aufnahme passender Befestigungsflansch ausgebildet ist, und dessen zweite Öffnung mit einem Verschlussdeckel (512) verschliessbar ist.

26. Dosiervorrichtung (100) nach einem der Ansprüche 1 bis 25, **dadurch gekennzeichnet, dass** der Dosierkopf (130) und/oder das Entnahmegefäss (110) eine Identifikationsmarkierung oder eine Sende/Empfangseinheit mit Datenspeichermodul (161, 561), insbesondere ein RFID- Tag aufweist und eine vom Entnahmegefäss (110) und vom Dosierkopf (130) getrennt angeordnete Lese/Schreibvorrichtung (160) vorhanden ist.
